# EUROPÄISCHE PATENTSCHRIFT

(11) **EP 4 328 493 B1**
(45) Veröffentlichungstag und Bekanntmachung des Hinweises auf die Patenterteilung: **02.07.2025**
(21) Anmeldenummer: 22192200.8
(22) Anmeldetag: 25.08.2022
(51) Int. Cl.: F24C 15/16, A47J 27/16, A47J 36/34

(54) **GASTRONORMGARGUTTRÄGER**
GASTRONORM COOKWARE CARRIER
SUPPORT POUR PRODUITS GASTRONORMES

(43) Veröffentlichungstag der Anmeldung: 28.02.2024
(73) Patentinhaber: Innotec Sp. z o.o., 73-210 Recz (PL)
(72) Erfinder: Möhl, Harald, 58515 Lüdenscheid (DE)
(74) Vertreter: Patentanwälte Dörner & Kötter PartG mbB

(56) Entgegenhaltungen:
- DE-A1- 102009 055 200
- DE-U1- 202010 012 814
- DE-U1- 202019 104 894
- ANONYMOUS: "contacto Katalog 2018", 31 December 2018 (2018-12-31), pages 1 - 552, XP093016167, Retrieved from the Internet <URL:https://www.contacto.de/ftpport/pdf/Contacto_Katalog_2018.pdf?lang=de> [retrieved on 20230120]

## Beschreibung

Die Erfindung betrifft einen Gastronormgargutträger nach dem Patentanspruch 1. Die Erfindung betrifft weiterhin ein Gastronormset nach dem Patentanspruch 9.

Im Bereich der Gastronomie werden regelmäßig Behältnisse sowie allgemein Gargutträger nach dem Gastronorm-Maßsystem eingesetzt, welches durch die Verwendung genormter Größen einen einfachen Austausch von Lebensmittelbehältern ermöglicht und insbesondere in lebensmittelverarbeitenden Betrieben sowie Großküchen Verwendung findet. Derartige Gastronormbehälter entsprechen der international gültigen Gastro-Norm und sind in der europäischen Union nach der EN631 festgelegt. Dass heute praktisch alle Hersteller von Großkücheneinrichtungen nach der Gastro-Norm arbeiten, garantiert eine größtmögliche Kompatibilität aller Einrichtungen. So wird es möglich, die Speisen rationell herzustellen, zu transportieren, zuzubereiten, warmzuhalten und anzubieten. Die Behälter sind dabei regelmäßig als tiefgezogene Chromnickelstahl-Behälter ausgeführt. Es sind jedoch beispielsweise aus der DE 10 2010 045 972 A1 auch Gastronormbehälter bekannt, die aus Aluminiumguss hergestellt sind. Ein weiterer Gargutträger aus Aluminiumguss ist aus der DE 10 2014 101 440 C2 bekannt. Solche Gastronormbehälter und -gargutträger zeichnen sich insbesondere durch ihre guten Wärmeleiteigenschaften sowie Wärmespeicherungseigenschaften aus. Weitere Gastronormgargutträger sind aus der Druckschrift DE202010012814 U1 bekannt, sowie aus dem Katalog "contacto Katalog 2018" (XP093016167).

Bei der Zubereitung von Speisen werden diese regelmäßig vorgegart bzw. kurz angebraten und nachfolgend in einen Gastronormbehälter gefüllt. Dieser Behälter wird nachfolgend in einen sogenannten Konvektomaten nach Gastro-Norm zum Nachgaren der Speisen eingestellt. Die so fertiggegarten Speisen werden nachfolgend - gegebenenfalls nach Zwischenlagerung in einer Warmhalteeinheit - in einer Auslage bereitgestellt, welche ebenfalls entsprechend der Gastro-Norm ausgebildet ist.

Ein Konvektomat, auch Heißluftdämpfer oder auch Kombidämpfer genannt, ist ein professionelles Gargerät, das feuchte Hitze (also Dampf) mit trockener Hitze (also Umluft) kombiniert. Konvektomaten kommen insbesondere in der Gastronomie sowie in der Großverpflegung, wie Krankenhäusern, Pflegeheimen zum Einsatz. In den Konvektomaten werden Gastronorm-Behälter oder Gastronormgargutträger mit Abmessungen nach Gastro-Norm eingesetzt. Es gibt Konvektomaten mit Einschüben für 2/1- GN Behälter oder Gargutträger mit den Abmessungen 650 mm x 530 mm, 1/1-GN Behälter oder Gargutträger mit den Abmessungen 530 mm x 325 mm sowie mit Einschüben für 2/3-GN Behälter oder Gargutträger mit den Abmessungen 352 mm x 325 mm.

Im Bereich der Gastronomie sind in großer Zahl unterschiedliche Speisen in unterschiedlichen Mengen zuzubereiten. Zwar sind nach Gastro-Norm unterschiedliche Behältergrößen verfügbar, die jeweils eine Teilung der maximalen Gastro-Norm-Fläche bilden. Doch auch solche Teilungen können die unterschiedlichen Speisen in ihren unterschiedlichen Größen nur unzureichend abdecken. Ein weiterer Nachteil ergibt sich dadurch, dass nach bedarfsgemäßer Entnahme einzelner erwärmter Gastro-Norm Behälter neue, kalte Behälter in den Konvektomaten verbracht werden, die sodann aufs Neue durch Heißluftstrom zu erwärmen sind.

Hier will die Erfindung Abhilfe schaffen. Der Erfindung liegt die Aufgabe zu Grunde, einen Gastronormgargutträger bereitzustellen, der im Bereich der Gastronomie eine höhere Flexibilität bei der Zubereitung von Speisen bei gleichzeitig geringerem Energiebedarf ermöglicht. Gemäß der Erfindung wird diese Aufgabe durch die Merkmale des Patentanspruchs 1 gelöst.

Mit der Erfindung ist ein Gastronormgargutträger geschaffen, der im Bereich der Gastronomie eine höhere Flexibilität bei der Zubereitung von Speisen bei gleichzeitig geringerem Energiebedarf ermöglicht. Dadurch, dass der Gastronormgargutträger aus Metallguss, insbesondere aus Aluminiumguss hergestellt ist und ein ebenes Rahmenteil umfasst, in dem wenigstens zwei zueinander beabstandete Ausnehmungen eingebracht sind, die jeweils von einer umlaufenden, trichterartig sich in Richtung der Ausnehmung verjüngend ausgebildeten Einwölbung begrenzt sind, können einzelne Speisen in einem Kochgefäß in den Gastronormgargutträger eingestellt und aus diesem wieder entnommen werden, ohne dass der Gastronormgargutträger selbst aus dem Konvektomaten entfernt werden muss. Die in dem Gastronormgargutträger gespeicherte Wärme bleibt erhalten. Ein in eine Einwölbung eingestelltes Kochgefäß wird nun in dem Konvektomaten zusätzlich zur Heißluft über Kontakt sowie die Konvektion der bereits erhitzen Einwölbung erwärmt. Hierdurch ist der Erwärmungsvorgang beschleunigt. Dabei ist das Rahmenteil bevorzugt rechteckig ausgebildet, wodurch die maximale Gastro-Norm-Fläche erzielt ist. Der Rahmen bildet zugleich die zum Einschieben in die Schienen eines Konvektomaten erforderlichen Einschubränder aus. Vorzugsweise begrenzen die Einwölbungen jeweils im Wesentlichen eine rechteckige oder eine elliptische Innenkontur. Um zum Einschieben in einen Konvektomaten geeignet zu sein, weist der Gastronormgargutträger entweder das Gastronorm-Flächenmaß 2/1- GN (650 mm x 530 mm) oder 1/1-GN (530 mm x 325 mm) oder 2/3-GN (352 mm x 325 mm) auf.

In Weiterbildung der Erfindung ist wenigstens eine Ausnehmung durch eine ebene Platte verschlossen. Hierdurch ist eine zusätzliche dauerhaft erhitzte Kontaktfläche erzielt, auf der ein aufgestelltes Kochgefäß zugleich von unten sowie seitlich von dem Gastronormgargutträger erhitzt wird. Zudem kann bedarfsweise in einer so verschlossenen Ausnehmung auch direkt eine Speise erwärmt werden.

Erfindungsgemäß ist parallel zu dem Rahmenteil zwischenraumfrei eine ebene, vorzugsweise rechteckige Platte angeordnet, die alle Ausnehmungen verschließt und die den Boden des Gastronormgargutträger ausbildet. Hierdurch ist zugleich eine ebene Aufstellfläche des Gastronormgargutträgers erzielt, der so nach Bedarf auch auf einer Kochplatte erhitzt werden kann, wodurch die Flexibilität weiter erhöht ist.

In weiterer Ausgestaltung der Erfindung ist zwischen wenigstens zwei Ausnehmungen, vorzugsweise zwischen allen Ausnehmungen in das Rahmenteil eine Rinne eingeformt. Hierdurch ist zum einen eine Auffangrinne für aus einen Kochbehälter austretende Flüssigkeit gebildet, zum anderen ist hierdurch eine Gewichtsreduktion des Gastronormgargutträgers erzielt.

Bevorzugt sind in dem Rahmenteil beabstandet zu den Ausnehmungen Dampfdurchtrittsöffnungen vorhanden. Diese können auch im Bereich der Rinne angeordnet sein, wobei die Rinne in diesem Fall nicht mehr zur Aufnahme von aus einen Kochbehälter austretende Flüssigkeit geeignet ist. Die Dampfdurchtrittsöffnungen unterstützen zum einen die Dampfzirkulation innerhalb eines Konvektomaten, in den der Gastronormgargutträger eingeschoben ist. Zum anderen unterstützt das durch die Dampfdurchtrittsöffnungen strömender Dampf die Aufheizung des Gastronormgargutträgers.

In Weiterbildung der Erfindung ist an das Rahmenteil an seiner den Einwölbungen zugewandten Unterseite zwischen diesen und seiner Außenkante oder entlang seiner Außenkante wenigstens ein Stapelsteg angeordnet. Hierdurch ist die Stapelfähigkeit des Gastronormgargutträgers erhöht, wobei ein Anhaften der Gastronormgargutträger durch mögliche Speisereste vermieden ist.

In Ausgestaltung der Erfindung sind an dem Rahmen an seiner der Unterseite gegenüberliegenden Oberseite beabstandet zu den Einwölbungen zwei gegenüberliegend angeordnete Griffe vorhanden. Hierdurch ist die Handhabung des Gastronormgargutträgers verbessert.

Der vorliegenden Erfindung liegt weiterhin die Aufgabe zu Grunde, ein Gastronormset bereitzustellen, das im Bereich der Gastronomie eine höhere Flexibilität bei der Zubereitung von Speisen bei gleichzeitig geringerem Energiebedarf ermöglicht. Gemäß der Erfindung wird diese Aufgabe durch ein Gastronormset mit den Merkmalen des Patentanspruchs 9 gelöst.

Mit der Erfindung ist ein Gastronormset bereitgestellt, das im Bereich der Gastronomie eine höhere Flexibilität bei der Zubereitung von Speisen bei gleichzeitig geringerem Energiebedarf ermöglicht. Dadurch, dass dieses einen Gastronormgargutträger der vorstehend beschriebenen Art sowie mindestes ein Kochgefäß umfasst, das in eine der Einwölbungen des Gastronormgargutträgers einstellbar ist, wobei die Außenmantelfläche des Kochgefäßes in dem der in der Einwölbung befindlichen Bereich im Wesentlichen der dieser zugewandten Mantelfläche der Einwölbung entspricht, ist durch Maximierung der Kontaktflächen ein optimaler Wärmeübergang zwischen dem Gastronormgargutträger und Kochgefäß erzielt.

In Weiterbildung der Erfindung ist wenigstens eine Ausnehmung des Gastronormgargutträger durch eine ebene Platte verschlossen, wobei die Außenfläche des Bodens des mindestens einen Kochgefäßes eben ausgebildet ist, sodass dieser in einer in eine Einwölbung eingestellten Position des Kochgefäßes flächig auf der ebenen Platte aufliegt. Hierdurch ist die bodenseitige Wärmeübertragung auf das Kochgefäß maximiert.

In Ausgestaltung der Erfindung weist wenigstens ein Kochgefäß schräge, sich nach außen erweiternde Seitenwände auf. Hierdurch ist das Aufnahmevolumen des Kochgefäßes optimiert. Vorzugsweise sind weisen alle Kochgefäße schräge, sich nach außen erweiternde Seitenwände auf, bevorzugt derart, dass die Außenkanten der Seitenwände der in die Einwölbungen des Gastronormgargutträgers eingebrachten Kochgefäße nur einen geringen Abstand zueinander aufweisen. Hierdurch ist eine maximale Nutzung der Fläche des Gastronormgargutträgers erzielt.

In weiterer Ausgestaltung der Erfindung weist wenigstens ein Kochgefäß einen im Wesentlichen rechteckigen Boden auf, wobei eine seiner Längsseitenwände in Bezug auf die gegenüberliegenden Längsseitenwand eine geringere Höhe aufweist, wodurch die Form einer Schütte gebildet ist. Hierdurch ist eine gute Sichtbarkeit der in den Kochgefäßen befindlichen Speisen erzielt. Zudem ist die Entnahme der Speisen vereinfacht.

In Weiterbildung der Erfindung weist wenigstens eines der Kochgefäße auf zwei gegenüberliegenden Seitenwänden einen Stapelsteg auf. Hierdurch ist die Stapelfähigkeit des Kochgefäßes verbessert.

In Ausgestaltung der Erfindung ist wenigstens ein Kochgefäß innen mit einer Antihaftbeschichtung, vorzugsweise einer PTFE-Beschichtung versehen. Hierdurch ist eine schnelle Entnahme einer Speise mit nachfolgender schneller Reinigung des Kochgefäßes ermöglicht, wodurch dessen Wärme weitgehend zu erhalten ist, bevor es erneut befüllt in den Gastronormgargutträger eingestellt wird.

In Weiterbildung der Erfindung ist wenigstens eines der Kochgefäße aus Metallguss, insbesondere aus Aluminiumguss hergestellt. Hierdurch ist eine gute Wärmespeicherung sowie ein guter Wärmeübertrag zwischen Gastronormgargutträger und Kochgefäß erzielt.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Figur 1: die schematische räumliche Darstellung eines Gastronormgargutträgers in einer Ansicht von oben;
- Figur 2: die räumliche Darstellung des Gastronormgargutträgers aus Fig. 1 in einer Ansicht von unten;
- Figur 3: die räumliche Darstellung eines Gastrosets in einer Ansicht von oben;
- Figur 4: die räumliche Darstellung des Gastrosets aus Figur 3 in einer Seitenansicht;
- Figur 5: die räumliche Darstellung des Kochgefäßes des Gastrosets auch Figur 3 in einer Ansicht von unten;
- Figur 6: die räumliche Darstellung eines Gastronormsets gemäß Figur 3 mit vollständig bestücktem Gastronormgargutträger und angestellter Griffzange und

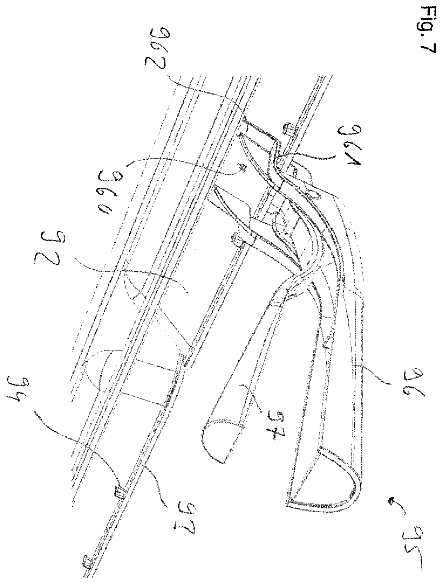

- Figur 7: eine Detaildarstellung des Griffbereichs der Griffzange aus Figur 6.

Der als Ausführungsbeispiel gewählte Gastronormgargutträger 1 ist einstückig als Aluminiumgussteil hergestellt und besteht im Wesentlichen aus einem ebenen Rahmenteil 2, in dem vier Ausnehmungen 3 eingebracht sind, die durch trichterartig sich in Richtung der Ausnehmung verjüngend ausgebildete Einwölbungen 4 begrenzt sind. Die trichterartige Verjüngung ist hierbei durch Radien der Einwölbungen 4 gebildet. Alternativ können die Einwölbungen auch weitgehend eben sein, wodurch Schrägen gebildet sind. Sie können natürlich auch jedwede andere Form aufweisen, durch die eine Verjüngung in Richtung der Ausnehmung erzielt ist. Im Ausführungsbeispiel sind die Ausnehmungen 3 identisch ausgebildet und begrenzen eine weitgehend rechteckige Innenkontur. Dabei sind die Ausnehmungen 3 gleichmäßig beabstandet zueinander angeordnet.

Die Ausnehmungen 3 sind durch eine ebene Platte 5 verschlossen, die sich über alle Ausnehmungen 3 hinweg erstreckt und die den Boden des Gastronormgargutträger 1 bildet. Die Platte 5 ist parallel zu dem Rahmenteil 2 zwischenraumfrei angeordnet, das heißt, der Gastronormgargutträger 1 ist ein durchgehend massiv ausgebildeter Aluminiumgusskörper mit unterschiedlichen Materialstärken, der einen Abschnitt in Form der Platte 5 aufweist.

Zwischen allen Ausnehmungen ist eine Rinne 6 vorhanden, die in Form eines Kreuzes zwischen diesen verläuft. Die Tiefe der Rinne 6 entspricht im Ausführungsbeispiel der Tiefe der Einwölbungen 4, wodurch eine hohe Gewichtseinsparung erzielt ist. Die Rinne 6 kann natürlich auch anders dimensioniert ausgeführt sein.

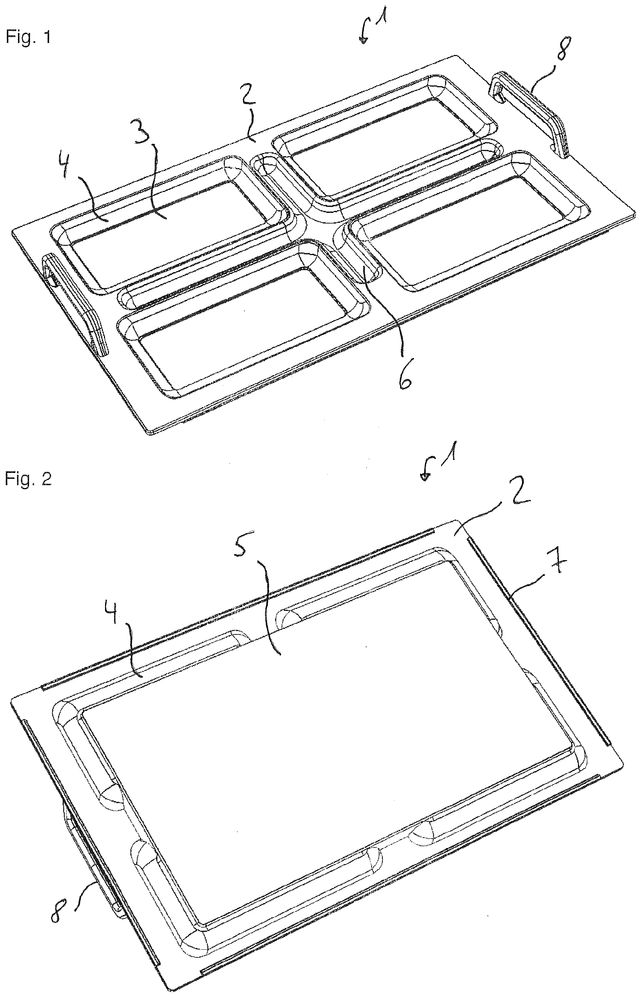

Wie aus Figur 2 ersichtlich erstreckt sich die ebene Platte 5 nur soweit über die Ausnehmungen 3, dass diese verschlossen sind. Die außen hierüber hinausgehenden Außenflächen der Einwölbungen 4 sind nicht überdeckt. Ersichtlich ergibt sich so eine weiter gewichtsoptimierte Gestaltung des Gastronormgargutträgers 1.

An seiner den Einwölbungen 4 zugewandten Unterseite ist an das Rahmenteil 2 entlang seiner Außenkanten jeweils ein Stapelsteg 7 angeordnet. Dabei erstrecken sich die Stapelstege 7 im Ausführungsbeispiel bis in den Bereich der Ecken, wodurch eine große Auflagefläche erzielt ist, was eine stabile Stapelung gewährleistet. Die Stapelstege 7 dienen dabei zugleich als Auflagesteg zum Einschieben in zwei gegenüberliegend angeordnete Schienen eines Konvektomaten. Hierzu sind diese jeweils endseitig mit einer Schräge versehen. Auf seiner den Stapelstegen 7 gegenüberliegenden Oberseite weist das Rahmenteil 2 an seinen Querseiten jeweils einen Griff 8 auf.

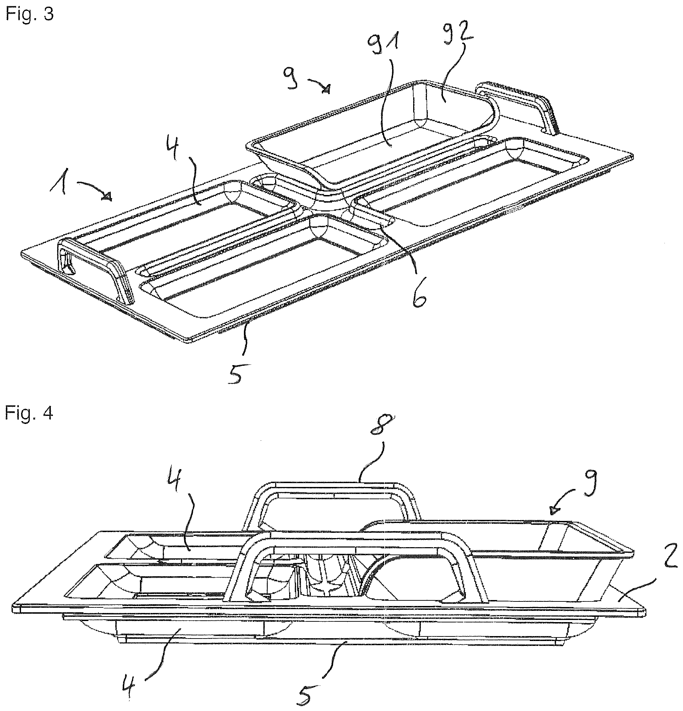

In Figur 3 ist der vorstehend beschriebene Gastronormgargutträger 1 als Bestandteil eines Gastrosets dargestellt, das im Ausführungsbeispiel mehrere identisch ausgebildete Kochgefäße 9 umfasst, von denen eines in eine Einwölbung 4 des Gastronormgargutträgers 1 eingestellt dargestellt ist.

Das Kochgefäß 9 ist im Ausführungsbeispiel als Aluminiumgussteil mit im Wesentlichen rechteckiger Grundfläche hergestellt, dessen Innenseiten mit einer PTFE-Beschichtung versehen sind. Der Übergang der durch den Boden 91 gebildeten Grundfläche in die schräg nach außen angestellten Seitenwände 92 ist als Radius ausgebildet, derart, dass die Außenmantelfläche des Kochgefäßes 9 in dem der in der Einwölbung 4 befindlichen Bereich im Wesentlichen der dieser zugewandten Mantelfläche der Einwölbung 4 entspricht. Dabei liegt die Grundfläche des Bodens 91 des Kochgefäßes 9 flächig auf der die Ausnehmung 3 verschließenden Platte 5 auf. Eine vordere Längsseitenwand 92 des Kochgefäßes 9 ist gegenüber seiner anderen, hinteren Längsseitenwand 92 niedriger ausgeführt, wodurch die Form einer Schütte erzielt ist. Die Seitenwände 92 der Kochgefäße 9 des Gastrosets sind derart dimensioniert, dass sie bei vollständiger Bestückung der Einwölbungen 3 des Gastronormgargutträgers 1 mit Kochgefäßen 9 nur einen geringen Abstand voneinander aufweisen, sodass durch die Kochgefäße die gesamte Fläche des Gastronormgargutträgers 1 weitgehend überdeckt wird.

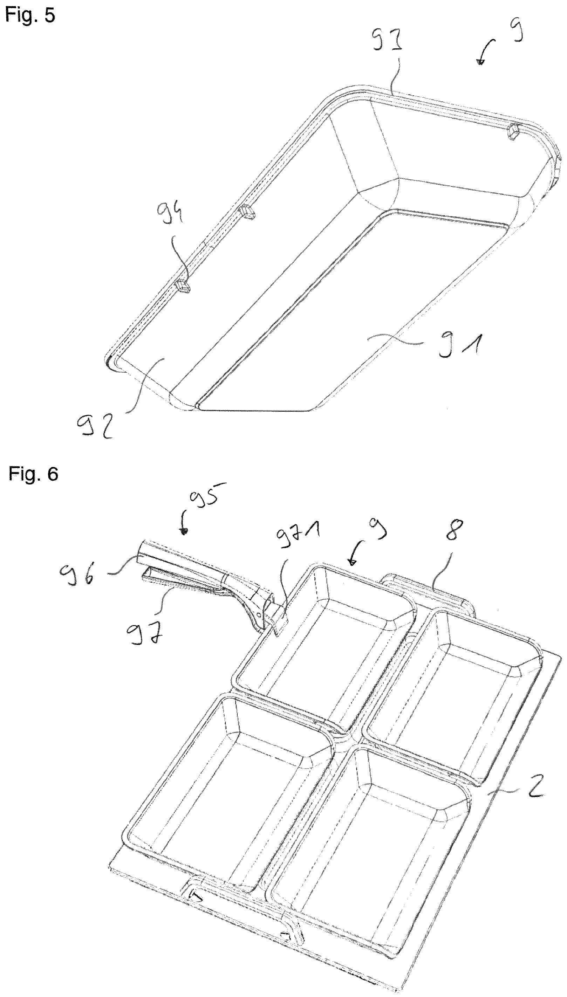

Wie in Figur 5 dargestellt ist, weist das Kochgefäß 9 auf seinen Seitenwänden 92 einen umlaufenden, nach außen kragenden Rand 93 auf. Auf seiner dem Boden 91 zugewandten Unterseite sind an dem Rand 93 beabstandet zueinander angeordnete Stapelstege 94 angeordnet. Durch die Stapelstege 94 ist ein Abstand zwischen zwei ineinander gestapelten Kochgefäßen 9 gewährleistet.

Die Griffzange 95, die als abnehmbarer Griff des Kochgefäßes fungiert, besteht im Wesentlichen aus zwei Zangenschenkeln 96, 97, die über eine Achse 98 schwenkbar miteinander verbunden sind. Der erste Zangenschenkel 96 weist kopfseitig zwei gegenüberliegend angeordnete Flügel 960 auf, die abgewinkelt sind und eine Auflagefläche 961 und eine winklig zu dieser angestellte Anschlagfläche 962 bilden. Der Winkel zwischen der Auflagefläche 961 und der Anschlagfläche 962 entspricht im Wesentlichen dem Winkel zwischen der hinteren Längsseitenwand 92 des Kochgefäßes 9 und dem auf dieser angeordneten, nach außen kragenden Rand 93.

Zwischen den Flügeln 960 hindurch ist der zweite Zangenschenkel 97 geführt, der kopfseitig in eine Klemmplatte 971 übergeht. Der Anstellwinkel der Klemmplatte 971 an den zweiten Zangenschenkel 97 entspricht im Wesentlichen dem Anstellwinkel der hinteren Längsseitenwand 92 an den Boden 91. Der zweite Zangenschenkel 97 ist derart in dem ersten Zangenschenkel 96 auf der Achse 98 gelagert, dass die Griffzange 95 in Normalstellung geöffnet ist. Hierdurch ist der Greifprozess vereinfacht, da die Griffzange 95 bei nachlassender Betätigung des zweiten Zangenflügels 97 automatisch öffnet.

Zur Handhabung des Kochgefäßes 9 wird die hintere Längsseitenwand 92 mit der Griffzange 95 derart gegriffen, dass die Anschlagflächen 962 der Flügel 960 des ersten Zangenschenkels 96 außen an der hinteren Längsseitenwand 92 anliegen, wobei die Klemmplatte 971 den Rand 93 des Kochgefäßes 9 übergreifend innen an der hinteren Längsseitenwand 92 anliegt. Die abgewinkelten Flügel 960 verlaufen dabei unterhalb des Randes 93, wodurch der Rand 93 bei nachlassender Klemmkraft der Griffzange 95 auf den Auflageflächen 961 der beiden Flügel 960 aufliegt. Das Kochgefäß 9 ist so in der Griffzange 9 sicher gehalten. Im Ausführungsbeispiel gemäß Figur 5 sind an der hinteren Längsseitenwand 92 des Kochgefäßes 9 zwei Stapelstege 94 derart beabstandet zueinander angeordnet, dass deren Abstand zueinander etwas breiter ist, als die beabstandet zueinander angeordneten Anschlagflächen 962 des Zangenschenkels 96 der Griffzange 9. Diese Stapelstege 94 bieten so seitliche Anlagepunkte aus, wodurch eine mittige Positionierung der Griffzange 95 zur Aufnahme des Kochgefäßes 9 unterstützt wird.

## Patentansprüche

1. Gastronormgargutträger (1) aus Metallguss, insbesondere aus Aluminiumguss, zum Einschieben in einen Konvektomaten, mit einem ebenen Rahmenteil (2), in dem wenigstens zwei zueinander beabstandete Ausnehmungen (3) eingebracht sind, die jeweils von einer umlaufenden, trichterartig sich in Richtung der Ausnehmung verjüngend ausgebildeten Einwölbung (4) begrenzt sind, wobei parallel zu dem Rahmenteil (2) zwischenraumfrei eine ebene Platte (5) angeordnet ist, die alle Ausnehmungen (3) verschließt und die den Boden des Gastronormgargutträgers (1) ausbildet.

2. Gastronormgargutträger nach Anspruch 1, **dadurch gekennzeichnet, dass** das Rahmenteil (2) im Wesentlichen rechteckig ausgebildet ist.

3. Gastronormgargutträger nach Anspruch 1 oder 2, **dadurch gekennzeichnet, dass** die Einwölbungen (4) jeweils im Wesentlichen eine rechteckige oder eine elliptische Innenkontur begrenzen.

4. Gastronormgargutträger nach einem der vorgenannten Ansprüche, **dadurch gekennzeichnet, dass** zwischen wenigstens zwei Ausnehmungen (3), vorzugsweise zwischen allen Ausnehmungen (3), in das Rahmenteil (2) eine Rinne (6) eingeformt ist und/oder dass in dem Rahmenteil (2) beabstandet zu den Ausnehmungen (3) Dampfdurchtrittsöffnungen vorhanden sind.

5. Gastronormgargutträger nach einem der vorgenannten Ansprüche, **dadurch gekennzeichnet, dass** an das Rahmenteil (2) an seiner den Einwölbungen (4) zugewandten Unterseite zwischen diesen und seiner Außenkante oder entlang seiner Außenkante wenigstens ein Stapelsteg (7) angeordnet ist.

6. Gastronormgargutträger nach einem der vorgenannten Ansprüche, **dadurch gekennzeichnet, dass** an dem Rahmen (2) an seiner der Unterseite gegenüberliegenden Oberseite beabstandet zu den Einwölbungen (4) zwei gegenüberliegend angeordnete Griffe (8) vorhanden sind.

7. Gastronormset, umfassend einen Gastronormgargutträger (1) nach einem der vorgenannten Ansprüche sowie mindestens ein Kochgefäß (9), das in eine der Einwölbungen (4) des Gastronormgargutträgers (1) einstellbar ist, wobei die Außenmantelfläche des Kochgefäßes (9) in dem der in der Einwölbung (4) befindlichen Bereich im Wesentlichen der dieser zugewandten Mantelfläche der Einwölbung (4) entspricht.

8. Gastronormset nach Anspruch 7, **dadurch gekennzeichnet, dass** der Gastronormgargutträger (1) nach einem der der Ansprüche 1 bis 6 ausgebildet ist, wobei die Außenfläche des Bodens (91) des mindestens einen Kochgefäßes (9) eben ausgebildet ist, sodass dieser in einer in eine Einwölbung (4) eingestellten Position des Kochgefäßes (9) flächig auf der ebenen Platte (5) aufliegt.

9. Gastronormset nach Anspruch 7 oder 8, **dadurch gekennzeichnet, dass** wenigstens ein Kochgefäß (9) schräge, sich nach außen erweiternde Seitenwände (92) aufweist.

10. Gastronormset nach Anspruch 9, **dadurch gekennzeichnet, dass** wenigsten ein Kochgefäß (9) einen im Wesentlichen rechteckigen Boden (91) aufweist, wobei eine seiner Längsseitenwände (92) in Bezug auf die gegenüberliegenden Längsseitenwand (92) eine geringere Höhe aufweist, wodurch die Form einer Schütte gebildet ist.

11. Gastronormset nach einem der Ansprüche 7 bis 10, **dadurch gekennzeichnet, dass** wenigstens eines der Kochgefäße (9) auf zwei gegenüberliegenden Seitenwänden (92) einen Stapelsteg (94) aufweist.

12. Gastronormset nach einem der Ansprüche 7 bis 11, **dadurch gekennzeichnet, dass** wenigstens ein Kochgefäß (9) innen mit einer Antihaftbeschichtung versehen ist.

13. Gastronormset nach einem der Ansprüche 7 bis 12, **dadurch gekennzeichnet, dass** wenigstens eines der Kochgefäße (9) aus Metallguss, insbesondere aus Aluminiumguss hergestellt ist.

14. Gastronormset nach einem der Ansprüche 7 bis 13, **dadurch gekennzeichnet, dass** dieses wenigstens eine Griffzange (95) umfasst, deren erster Zangenschenkel (96) kopfseitig zwei abgewinkelte Flügel (960) aufweist, die jeweils eine Auflagefläche (961) und eine winklig zu dieser angestellte Anschlagfläche (962) bilden und deren zweiter Zangenschenkel (97) zwischen den Flügeln (960) des ersten Zangenschenkels (96) durchgeführt ist und kopfseitig in eine Klemmplatte (971) übergeht, deren Anstellwinkel an den zweiten Zangenschenkel (97) im Wesentlichen dem Anstellwinkel der hinteren Längsseitenwand (92) eines Kochgefäßes (9) an den Boden (91) entspricht, wobei die beiden Zangenschenkel (96, 97) in eine Greifposition bringbar sind, in der sich die Anschlagflächen (962) der Flügel (960) und die Klemmplatte (971) auf parallel zueinander liegenden Ebenen befinden.

## Claims

1. Gastronorm cookware carrier (1) made of cast metal, in particular of cast aluminium, for insertion into a convection oven, with a flat frame part (2), in which at least two recesses (3) are provided at a distance from one another, which are each delimited by a circumferential indentation (4) which tapers in a funnel-like manner in the direction of the recess, wherein a flat plate (5) is arranged parallel to the frame part (2) without any intermediate space, which closes all recesses (3) and which forms the base of the gastronorm cookware carrier (1).

2. Gastronorm cookware carrier according to claim 1, **characterised in that** the frame part (2) is substantially rectangular.

3. Gastronorm cookware carrier according to claim 1 or 2, **characterised in that** the indentations (4) each substantially delimit a rectangular or an elliptical inner contour.

4. Gastronorm cookware carrier according to one of the preceding claims,
**characterised in that** a channel (6) is moulded into the frame part (2) between at least two recesses (3), preferably between all recesses (3) and/or **in that** steam passage openings are provided in the frame part (2) at a distance from the recesses (3).

5. Gastronorm cookware carrier according to one of the preceding claims,
**characterised in that** at least one stacking web (7) is arranged on the frame part (2) on its underside facing the indentations (4) between these and its outer edge or along its outer edge.

6. Gastronorm cookware carrier according to one of the preceding claims,
**characterised in that** two oppositely arranged handles (8) are provided on the frame (2) on its upper side opposite the underside at a distance from the indentations (4).

7. Gastronorm set comprising a gastronorm cookware carrier (1) according to one of the preceding claims as well as at least one cooking vessel (9), which can be placed in one of the indentations (4) of the gastronorm cookware carrier (1), wherein the outer surface of the cooking vessel (9), in the area located in the indentation (4), substantially corresponds to the outer surface of the indentation (4) facing it.

8. Gastronorm set according to claim 7, **characterised in that** the gastronorm cookware carrier (1) is designed according to one of claims 1 to 6, wherein the outer surface of the base (91) of the at least one cooking vessel (9) is of flat design so that this rests flat on the flat plate (5) in a position of the cooking vessel (9) placed in an indentation (4).

9. Gastronorm set according to claim 7 or 8, **characterised in that** at least one cooking vessel (9) has sloping, outwardly widening side walls (92).

10. Gastronorm set according to claim 9, **characterised in that** at least one cooking vessel (9) has a substantially rectangular base (91), wherein one of its longitudinal side walls (92) has a lower height in relation to the opposite longitudinal side wall (92), whereby the shape of a chute is formed.

11. Gastronorm set according to one of claims 7 to 10, **characterised in that** at least one of the cooking vessels (9) has a stacking web (94) on two opposite side walls (92).

12. Gastronorm set according to one of claims 7 to 11, **characterised in that** at least one cooking vessel (9) is provided with a non-stick coating on the inside.

13. Gastronorm set according to one of claims 7 to 12, **characterised in that** at least one of the cooking vessels (9) is made of cast metal, in particular of cast aluminium.

14. Gastronorm set according to one of claims 7 to 13, **characterised in that** it comprises at least one pair of gripping tongs (95), the first tong limb (96) of which has two angled wings (960) on the head side, each forming a bearing surface (961) and a stop surface (962) set at an angle thereto, and the second tong limb (97) of which is guided between the wings (960) of the first tong limb (96) and merges into a clamping plate (971) on the head side, whose angle relative to the second tong limb (97) substantially corresponds to the angle of the rear longitudinal side wall (92) of a cooking vessel (9) relative to the base (91), wherein the two tong limbs (96, 97) can be brought into a gripping position in which the stop surfaces (962) of the wings (960) and the clamping plate (971) are located on planes lying parallel to one another.

## Revendications

1. Support de produit de cuisson Gastronorm (1) en métal coulé, en particulier en fonte d'aluminium, à insérer dans un convectomate, avec un cadre plan (2) dans lequel au moins deux évidements respectivement limités sur leur pourtour par une cavité (4) qui se rétrécit comme un entonnoir en direction de l'évidement sont réalisés à distance l'un de l'autre (3), sachant qu'une plaque plane (5) qui ferme tous les évidements (3) et forme le fond du support de produit de cuisson (1) est disposée sans interstice parallèlement au cadre (2).

2. Support de produit de cuisson gastronorm selon la revendication 1,
**caractérisé en ce que** le cadre (2) est essentiellement de forme rectangulaire.

3. Support de produit de cuisson gastronorm selon la revendication 1 ou 2, **caractérisé en ce que** les cavités (4) limitent essentiellement un contour intérieur rectangulaire ou elliptique.

4. Support de produit de cuisson gastronorm selon l'une des revendications précédentes, **caractérisé en ce qu'**entre au moins deux évidements (3), de préférence entre tous les évidements (3), une rigole (6) est formée dans le cadre (2) et/ou qu'il y a des ouvertures pour le passage de la vapeur dans le cadre (2) à distance des évidements (3).

5. Support de produit de cuisson gastronorm selon l'une des revendications précédentes, **caractérisé en ce que** sur le cadre (2), sur sa face inférieure tournée vers les cavités (4), au moins un bord d'empilage (7) est disposé entre ces dernières et son bord extérieur ou le long de son bord extérieur.

6. Support de produit de cuisson gastronorm selon l'une des revendications précédentes, **caractérisé en ce que** sur le cadre (2), sur sa face supérieure opposée à la face inférieure, se trouvent deux poignées (8) situées l'une en face de l'autre à distance des cavités (4).

7. Ensemble gastronorm comprenant un support de produit de cuisson gastronorm (1) selon l'une des revendications précédentes ainsi qu'au moins un récipient de cuisson (9) pouvant être placé dans une des cavités (4) du support de produit de cuisson gastronorm (1), sachant que la surface enveloppante extérieure du récipient de cuisson (9) dans la zone située dans la cavité (4) correspond essentiellement à la surface enveloppante de la cavité (4) tournée vers elle.

8. Ensemble gastronorm selon la revendication 7, **caractérisé en ce que** le support de produit de cuisson gastronorm (1) est formé selon l'une des revendications 1 à 6, la surface extérieure du fond (91) d'au moins un récipient de cuisson (9) étant de forme plane de manière à ce que le fond repose entièrement sur la plaque plane (5) lorsque le récipient de cuisson (9) est placé dans une cavité (4).

9. Ensemble gastronorm selon la revendication 7 ou 8, **caractérisé en ce qu'**au moins un récipient de cuisson (9) présente des parois latérales obliques qui s'élargissent vers l'extérieur (92).

10. Ensemble gastronorm selon la revendication 9, **caractérisé en ce qu'**au moins un récipient de cuisson (9) présente un fond essentiellement rectangulaire (91), sachant qu'une de ses parois latérales longitudinales (92) est moins haute que la paroi latérale longitudinale opposée (92), ce qui forme ainsi une goulotte.

11. Ensemble gastronorm selon l'une des revendications 7 à 10, **caractérisé en ce qu'**au moins un des récipients de cuisson (9) présente un bord d'empilage (94) sur deux parois latérales opposées (92).

12. Ensemble gastronorm selon l'une des revendications 7 à 11, **caractérisé en ce que** l'intérieur d'au moins un récipient de cuisson (9) est doté d'un revêtement antiadhésif.

13. Ensemble gastronorm selon l'une des revendications 7 à 12, **caractérisé en ce qu'**au moins un des récipient de cuisson (9) est fabriqué en métal coulé, en particulier en fonte d'aluminium.

14. Ensemble gastronorm selon l'une des revendications 7 à 13, **caractérisé en ce que** cet ensemble comprend au moins une pince (95) dont la première branche de pince (96) présente du côté de la tête deux ailettes coudées (960) qui forment respectivement une surface d'appui (961) et une surface de butée (962) en contact perpendiculairement à celle-ci, et dont la deuxième branche de pince (97) traverse les ailettes (960) de la première branche de pince (96) et se transforme, du côté de la tête, en plaque de serrage (971) dont l'angle d'attaque sur la deuxième branche de pince (97) correspond essentiellement à l'angle d'attaque de la paroi latérale longitudinale arrière (92) d'un récipient de cuisson (9) sur le fond (91), sachant que les deux branches de pince (96, 97) peuvent être mises dans une position de saisie dans laquelle les surfaces de butée (962) des ailettes (960) et la plaque de serrage (971) se trouvent sur des plans parallèles les uns aux autres.
